# EUROPEAN PATENT SPECIFICATION

(11) **EP 0 313 534 B1**
(45) Date of publication and mention of the grant of the patent: **06.07.1994**
(21) Application number: 88850342.2
(22) Date of filing: 14.10.1988
(51) Int. Cl.: B23B 27/14

(54) **Method for chip removing machining**
Verfahren zur spanabhebenden Bearbeitung
Procédé d'usinage par enlèvement de copeaux

(30) Priority: 19.10.1987 SE 8704055
(43) Date of publication of application: 26.04.1989
(73) Proprietor: SECO TOOLS AB, S-773 01 Fagersta (SE)
(72) Inventor: Eklund, Sven, S-773 00 Fagersta (SE); Loqvist, Kaj-Ragnar, S-773 00 Fagersta (SE); Forsberg, Karl-Erik, S-773 00 Fagersta (SE)
(74) Representative: Eriksson, Kjell

(56) References cited:
- DE-A- 2 610 097
- FR-A- 2 428 491
- GB-A- 2 095 140
- US-A- 3 341 920

## Description

The present invention relates to a method for chip removing machining, preferably turning or drilling, said method including simultaneous cutting by two separate cutting edges located on the same cutting insert, said cutting edges including a main cutting edge carrying out a relatively seen rough machining and a further cutting edge carrying out a relatively seen fine machining, the further cutting edge being located behind the main cutting edge seen in the feeding direction of the cutting insert.

From DE-A-2 610 097 is known a method for chip removing machining. However, according to said known method the further cutting edge has the same cutting depth as the main cutting edge, i.e. the further cutting edge only removes the peaks that are created by the rough machining. This means that in the areas between the peaks the further cutting edge mainly carries out a polishing function. Such polishing action generates heat to a greater extent than a true cutting action and consequently the length of life of the cutting insert is negatively affected when polishing is performed.

The present invention has the aim of disclosing a method for chip removing machining as defined above, said method in e.g. longitudinal turning simultaneously carries out rough and fine chip removing machining.

The aim of the present invention is realized by a method that has been given the characteristics of the appending claims.

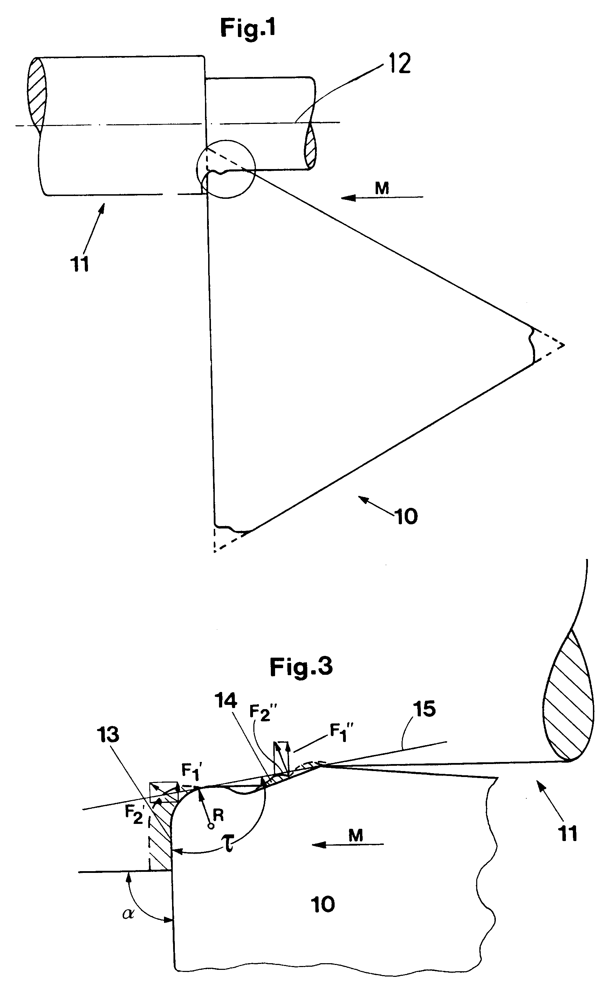

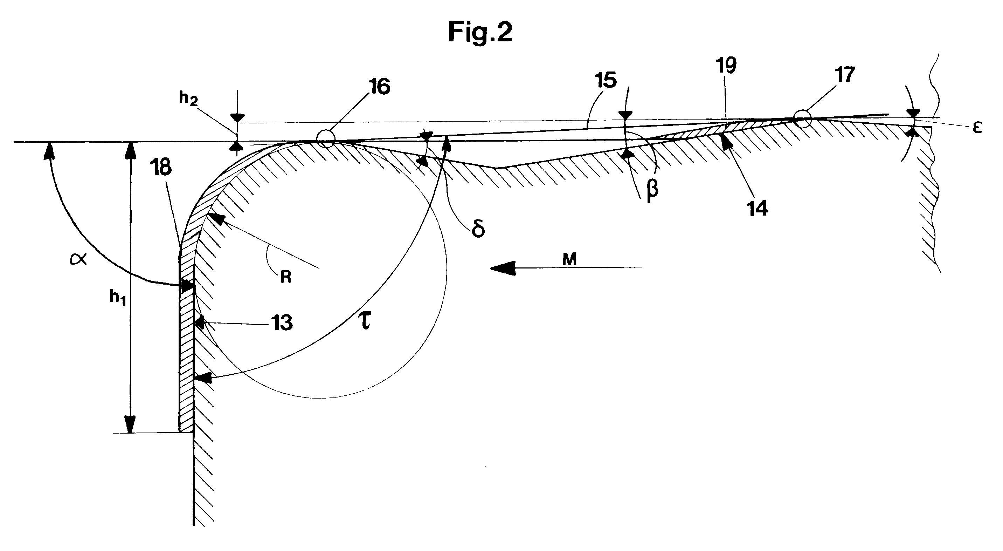

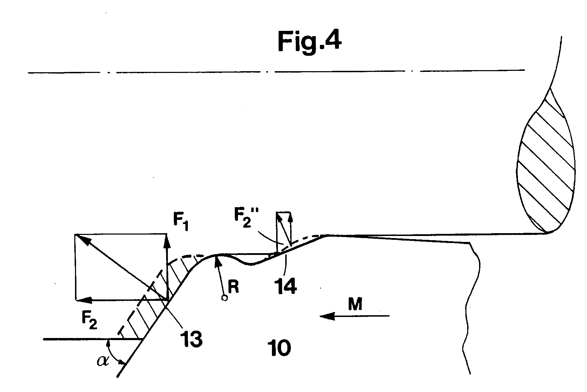

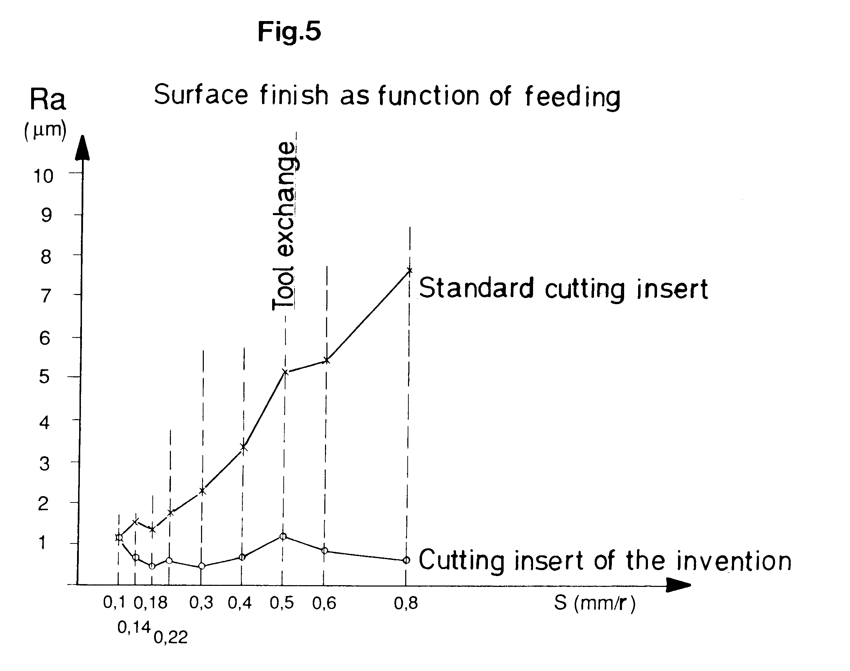

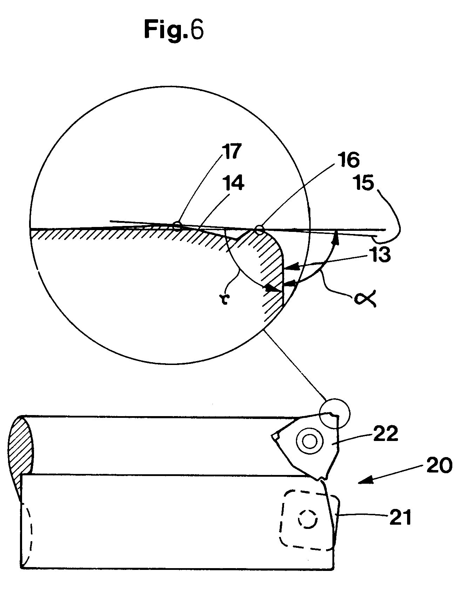

Embodiments of the invention will be described below, reference being made to the accompaning drawings where Fig.1 shows a cutting insert to carry out the method according to the invention, said cutting insert being shown in operative position in longitudinal turning; Fig.2 shows a detail of the cutting insert according to Fig.1; Fig.3 shows the radial forces that act upon the cutting insert in longitudinal turning; Fig.4 shows the radial forces in an alternative embodiment of the cutting insert according to the invention; Fig.5 shows a diagram of the variation of the surface finish relative to the feed speed of a cutting insert according to the invention compared to a conventional cutting insert; and Fig.6 shows a cutting insert according to the invention mounted in a short hole drill.

The cutting insert 10 schematically shown in Fig.1 has in the disclosed embodiment a triangular basic shape. However, within the scope of the invention it is possible to have other basic shapes, e.g. rombic.

The indexable insert 10 is mounted in a holder (not shown). A workpiece 11 is machined by the indexable insert 10, said workpiece 11 being rotated around its longitudinal centre axis 12. The feeding direction of the insert 10 is designated by M.

The encircled portion A of Fig.1 is shown more in detail in Fig.2.

As can be learnt from Fig.2 the indexable insert 10 includes at least one cutting corner having a main cutting edge 13 and a secondary cutting edge 14.

In the disclosed embodiment the straigth portion of the main cutting edge 13 has a setting angle α of 90°. The clear angle δ can vary within relativly wide limits. In the disclosed embodiment δ ≈ 5°. The cutting depth for the main cutting edge is designated by h₁ and the nose radius is designated by R. The magnitude of the nose radius should be in the interval of 0.2 - 3.2 mm.

The cutting depth h₂ of the secondary cutting edge 14 is smaller than 0.5 mm and preferably in the magnitude of 0.03 mm.

The setting angle of the secondary cutting edge 14 is designated by β and should have a magnitude of 3° although also bigger setting angles are possible.

The clear angle ε of the secondary cutting edge 14 should be smaller than 2°. In the disclosed embodiment ε ≈ 15'.

_{I}n Fig.2 is also drawn a line 15 that touches the cutting corner in a point 16 and also passes through the end point 17 of the secondary cutting edge 14 being located furthest away from the main cutting edge 13. Said line 15 is denominated machining line. The angle that is included between said line 15 and the straight portion of the main cutting edge 13 is designated by τ.

The length of the line 15 between the points 16 and 17 is within the interval 0.1 - 4 mm, preferably 0.5 - 2 mm, e.g. 1 mm.

As is appearant from Fig.3 the radial feeding forces F₁' and F₁'' acting upon the main cutting edge 13 and the secondary cutting edge 14 are small. This means that the reaction forces acting upon the insert 10 are small.

By viewing Fig.3 it is realized that the smaller the nose radius R is the smaller is the radial force F₁'. When it comes to the radial force F₁'' the setting angle β of the secondary cutting edge 14 is indeed small relatively seen. However, also the cutting depth h₂ of the cutting edge 14 is small. This means that the magnitude of the radial force F₁'' is relatively seen small.

As is appearant from Fig.4 the invention is also applicable for an insert having a setting angle α different from 90°. If the setting angle α is smaller than 90° a bigger radial force F₁ for the main cutting edge 13 is achieved.

Within the scope of the invention it is also possible that the setting angle α of the main cutting edge 13 is somewhat bigger than 90°. In such a case the radial forces acting upon the straight portion of the main cutting edge 13 compensate the radial forces acting upon the curved portion of the main cutting edge and/or the radial forces acting upon the secondary cutting edge.

According to the invention the angle τ and the setting angle α together have a value within the interval of 177° - 210°, preferably 177° - 195°.

The cutting insert according to the present invention functions in the following way.

In longitudinal turning, see Fig.2, a chip 18 of normal appearance is achieved at the main cutting edge 13 while the secondary edge 14 produces a very thin chip 19. At a feeding speed of 0.2 mm per revolution a primary chip 18 of about 0.2 mm's thickness is received while the secondary chip 19 only is 0.02 mm thick. This in combination with a relatively seen small clear angle of the secondary cutting edge 14 brings about that the surface finish when using a cutting insert according to the present invention is essentially improved compared to a conventional cutting insert.

In this connection it should be noted that the principal of design including a secondary cutting edge brings about that the surface finish is far more independent of the feed speed per revolution than for conventional cutting inserts. Field tests have shown that for a feeding of 0.8 mm per revolution a satisfactory surface finish is achieved by using the principals of the present invention. This means that the tool wear, measured by the number of machined details, will decrease to an essential degree.

In Fig.5 a diagram is disclosed. From said diagram the improved surface finish, in the form of the average surface deviation "Rₐ", can be learnt for a cutting insert according to the present invention compared to a conventional cutting insert for different feed speeds "S".

As is appearant from the diagram according to Fig.5 a drastic improvement of the surface finish is achieved, especially for high feed speeds.

Within the scope of the invention more than two further cutting edges are possible.

In the embodiment of Fig.6 a short hole drill 20 is shown. Said drill is provided with a radially inner cutting insert 21 and a radially outer cutting insert 22. A detail in an enlarged scale of the radially outer cutting insert 22 is shown in Fig.6.

In a corresponding way to the embodiments described above the radially outer cutting insert 22 has a cutting corner including a main cutting edge 13 and a secondary cutting edge 14. The line that touches a point 16 in the cutting corner and passes through the end point 17 of the secondary cutting edge 14 that is located furthest away from the main cutting edge 13 is designated by 15 and denominated machining line.

The included angle between the main cutting edge 13 and the machining line 15 is denominated τ. The setting angle is denominated α. According to the invention the angle τ and the setting angle α together have a value within the interval 177° - 210°, preferably 177° - 195°.

The length of the machining line 15, between the points 16 and 17, is within the interval 0.1 - 4 mm, preferably 0.5 - 2 mm, e.g. 1 mm.

The invention is applicable both for positive and negative cutting inserts.

## Claims

1. Method for chip removing machining, preferably turning or drilling, said method including simultaneous cutting by two separate cutting edges located on the same cutting insert (10), said cutting edges including a main cutting edge (13) carrying out a relatively seen rough machining and a further cutting edge (14) carrying out a relatively seen fine machining, the further cutting edge (14) being located behind the main cutting edge (13) seen in the feeding direction of the cutting insert (10),
**characterized** in that the cutting depth (h₂) of the further cutting edge (14) is in the interval of 0.03-0.5 mm, and that said further cutting edge (14) is followed by a clearance surface in feeding direction, said clearance surface having a clearance angle (ε) in the interval of 0.25°-2°, said further cutting edge (14) carrying out the final machining.

2. Method according to claim 1,
**characterized in that** an included angle (τ; τₐ) is located between the straight portion of the main cutting edge (13) and a line (15) that touches the cutting corner in a point (16) and passes through an end point (17) of the further cutting edge (14), said end point (17) being located furthest away from the main cutting edge (13), a setting angle (α) of the main cutting edge (13) and the angle (τ) together have a value within the interval 177° - 210°, and that the distance between the touching point (16) of the cutting corner and the line (15) and the intersection point (17) between the line (15) and the secondary cutting edge (14) is in the interval 0.1 - 4 mm.

3. Method according to claim 2,
**characterized in that** the setting angle (α) and the angle (τ) together have a value within the interval 177° - 195°, and that the distance between the points (16) and (17) is within the interval 0.5 - 2 mm.

4. Method according to any of the preceeding claims,
**characterized in that** the setting angle (β) of the further cutting edge (14) is in the magnitude of 3°.

## Patentansprüche

1. Verfahren zur spanabhebenden Bearbeitung, vorzugsweise durch Drehen oder Bohren, wobei das Verfahren das gleichzeitige Schneiden von zwei getrennten Schneidkanten beinhaltet, die an demselben Schneideinsatz (10) angeordnet sind, wobei die Schneidkanten eine Hauptschneidkante (13) beinhalten, welche eine relativ gesehen grobe Bearbeitung ausführt, sowie eine weitere Schneidkante (14) beinhalten, die eine relativ gesehen feine Bearbeitung ausführt, wobei die weitere Schneidkante (14) hinter der Hauptschneidkante (13), gesehen in Vorschubrichtung des Schneideinsatzes (10), angeordnet ist,
dadurch gekennzeichnet, daß die Schneidtiefe (h₂) der weiteren Schneidkante (14) im Intervall zwischen 0,03 und 0,5 mm liegt und daß auf die weitere Schneidkante (14) eine Freifläche in Vorschubrichtung folgt, wobei die Freifläche einen Freiwinkel (ε) im Bereich von 0,25°-2° hat, wobei die weitere Schneidkante (14) die Endbearbeitung ausführt.

2. Verfahren nach Anspruch 1, dadurch gekennzeichnet, daß ein eingeschlossener Winkel (τ; τₐ) zwischen dem geraden Teil der Hauptschneidkante (13) und einer Linie (15) liegt, welche die Schneidkante in einem Punkt (16) berührt und durch einen Endpunkt (17) der weiteren Schneidkante (14) verläuft, wobei der Endpunkt (17) von der Hauptschneidkante (13) am weitesten entfernt liegt, wobei ein Anstellwinkel (α) der Hauptschneidkante (13) und der Winkel (τ) zusammen einen Wert im Bereich von 177°-210° haben, und daß der Abstand zwischen dem Berührpunkt (16) der Schneidecke und der Linie (15) und dem Schnittpunkt (17) zwischen der Linie (15) und der sekundären Schneidkante (14) in dem Bereich von 0,1-4 mm liegt.

3. Verfahren nach Anspruch 2, dadurch gekennzeichnet, daß der Anstellwinkel (α) und der Winkel (τ) zusammen einen Wert in dem Bereich von 177°-195° haben und daß der Abstand zwischen den Punkten (16) und (17) innerhalb des Bereiches von 0,5-2 mm liegt.

4. Verfahren nach einem der vorstehenden Ansprüche, dadurch gekennzeichnet, daß der Anstellwinkel (β) der weiteren Schneidkante (14) in der Größenordnung von 3° liegt.

## Revendications

1. Procédé d'usinage par enlèvement de copeaux, de préférence par tournage ou perçage, ledit procédé comprenant la coupe simultanée, par deux arêtes de coupe séparées disposées sur la même plaquette de coupe (10), lesdites arêtes de coupe comprenant une arête de coupe principale (13) effectuant un usinage dit de dégrossissage relatif et une arête de coupe secondaire (14) effectuant un usinage dit de finition relative, l'arête de coupe secondaire (14) étant disposée derrière ou en aval de l'arête de coupe principale (13), vue dans la direction d'avance de la plaquette de coupe (10), caractérisé en ce que la profondeur de passe (h₂) de l'arête de coupe secondaire (14) est dans la gamme de 0,03 à 0,5 mm, et que ladite arête de coupe secondaire (14) est suivie par une surface de dégagement dans la direction de l'avance, ladite surface de dégagement comprenant un angle de dégagement (ε) dans la gamme de 0,25° à 2°, ladite arête de coupe secondaire (14) effectuant l'usinage final.

2. Procédé selon la revendication 1, caractérisé en ce que l'angle inclus (γ ; γ₂) est situé entre la partie droite de l'arête de coupe principale (13) et une ligne (15) intersectant l'angle de coupe en un point (16) et passant par un point d'extrémité (17) de l'arête de coupe secondaire (14), ledit point d'extrémité (17) étant situé le plus éloigné de l'arête de coupe principale (13), un angle d'affûtage (α) de l'arête de coupe principale (13) et l'angle (γ) ayant tous deux une valeur comprise dans la gamme de 177° à 210°, et que la distance entre le point de contact (16) de l'angle de coupe et la ligne (15) et le point d'intersection (17) entre la ligne (15) et l'arête de coupe secondaire (14) est dans la gamme de 0,1 à 4 mm.

3. Procédé selon la revendication 2, caractérisé en ce que l'angle d'affûtage (α) et l'angle (γ) ont tous deux une valeur comprise dans la gamme de 177° à 195°, et que la distance entre les points (16) et (17) est comprise dans la gamme de 0,5 à 2 mm.

4. Procédé selon l'une quelconque des précédentes revendications, caractérisé en ce que l'angle de montage (β) de l'arête de coupe secondaire (14) est de l'ordre de 3°.
